(19) Europäisches Patentamt
European Patent Office
Office européen des brevets

(11) **EP 2 989 311 B1**

(12) **FASCICULE DE BREVET EUROPEEN**

(45) Date de publication et mention
de la délivrance du brevet:
**08.03.2017 Bulletin 2017/10**

(21) Numéro de dépôt: **14727584.6**

(22) Date de dépôt: **22.04.2014**

(51) Int Cl.:
***F02C 9/26*** *(2006.01)*

(86) Numéro de dépôt international:
**PCT/FR2014/050978**

(87) Numéro de publication internationale:
**WO 2014/174208 (30.10.2014 Gazette 2014/44)**

(54) **PROCÉDÉ ET DISPOSITIF DE GÉNÉRATION D'UNE COMMANDE DE DÉBIT DE CARBURANT DESTINÉ À ÊTRE INJECTÉ DANS UNE CHAMBRE DE COMBUSTION D'UNE TURBOMACHINE**

VERFAHREN UND VORRICHTUNG ZUR REGELUNG UND STEUERUNG DER KRAFTSTOFFMENGE EINES TURBOTRIEBWERKS

METHOD AND DEVICE FOR FUEL CONTROL OF A TURBOMACHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.04.2013 FR 1353700**

(43) Date de publication de la demande:
**02.03.2016 Bulletin 2016/09**

(73) Titulaire: **SNECMA**
**75015 Paris (FR)**

(72) Inventeur: **DJELASSI, Cedrik**
**F-77550 Moissy-Cramayel Cedex (FR)**

(74) Mandataire: **Fontenelle, Sandrine et al**
**Cabinet Beau de Loménie**
**158, rue de l'Université**
**75340 Paris Cedex 07 (FR)**

(56) Documents cités:
**EP-A2- 1 555 438      EP-A2- 2 476 910**
**FR-A1- 2 664 651      US-A- 3 937 588**
**US-A- 4 341 071**

**Description**

Arrière-plan de l'invention

La présente invention se rapporte au domaine général des turbomachines, et s'applique de façon privilégiée au domaine de l'aéronautique.

Elle concerne plus particulièrement la régulation en débit de carburant d'une turbomachine équipant un aéronef, comme par exemple un turboréacteur, lors d'une phase de démarrage de l'aéronef.

De façon connue, la régulation en débit de carburant d'un turboréacteur vise, par la génération de commandes de débit de carburant appropriées, à assurer que le débit massique de carburant injecté dans la chambre de combustion du turboréacteur ne dépasse pas une certaine valeur limite (inférieure ou supérieure), au-delà de laquelle un dysfonctionnement du turboréacteur peut être rencontré tel que par exemple une extinction ou un pompage d'un compresseur du turboréacteur.

Cette régulation est classiquement réalisée en boucle ouverte à l'aide de commandes de débit de carburant générées à partir d'une loi ou plus précisément d'un réseau de lois préétablies, donnant pour différentes valeurs d'un régime réduit d'un compresseur du turboréacteur (ex. compresseur haute-pression pour un turboréacteur double-corps), les débits de carburant à injecter dans la chambre de combustion.

On considère généralement deux groupes distincts de réseaux de lois préétablies :

- un premier groupe de réseaux de lois destiné à assurer l'allumage de la chambre de combustion, et fournissant une commande de débit de carburant notée *WFCmd* en fonction au moins du régime réduit du compresseur noté XNr, autrement dit :

$$WFCmd = f(XNr);$$

- et un second groupe de réseaux de lois, aussi connu sous le nom de butées C/P (en référence au ratio du débit de carburant C injecté dans la chambre de combustion sur la pression statique P mesurée en sortie de la chambre de combustion), établissant le débit de carburant permettant de gérer la phase d'enroulement du turboréacteur jusqu'au ralenti. De façon connue, une telle butée peut s'exprimer notamment sous la forme :

$$\frac{WF}{PS\sqrt{T/288.15}} = f(XNr, PT)$$

où WF représente le débit de carburant, PS la pression statique dans la chambre de combustion, *T* la température totale en entrée du compresseur haute pression, *XNr* le régime réduit du corps haute pression, et *PT* la pression totale en entrée de la soufflante.

Ces différents réseaux de lois sont établis de manière à prendre en compte les spécificités du turboréacteur ainsi que sa sensibilité à divers paramètres, tels que par exemple la température extérieure, le domaine de vol, etc.

Les turboréacteurs conçus aujourd'hui sont de plus en plus performants, et leurs composants (compresseur, turbine, etc.) sont optimisés pour des fonctionnements à haut régime, au détriment des bas régimes et notamment de la phase de démarrage.

Il en résulte une très grande sensibilité des turboréacteurs modernes vis-à-vis des conditions externes (ex. état thermique du turboréacteur, température extérieure, précision de dosage du carburant, type de carburant injecté, température extérieure, vieillissement du réacteur, etc), et une grande dispersion de comportement entre les turboréacteurs.

Les limites d'opérabilité des turboréacteurs prises en compte lors de la régulation en boucle ouverte connaissent donc une forte variabilité d'un turboréacteur à l'autre, qui est difficile à prédire.

Par ailleurs, la très grande sensibilité de ces turboréacteurs à de nombreux paramètres rend laborieux voire insurmontable l'ajustement des lois de commande précitées.

Il convient de noter que dans le cas d'un turboréacteur équipé d'un compresseur haute-pression ayant un fort taux de compression vis-à-vis du nombre d'étages du compresseur, cette très grande sensibilité se traduit en outre par l'existence d'un couloir relativement étroit entre la limite de pompage et la limite de stagnation.

Il existe donc un besoin d'un mécanisme de régulation en débit de carburant d'une turbomachine efficace et adapté à la phase de démarrage, qui tient compte des contraintes précitées imposées par les turbomachines conçues aujourd'hui.

Dans les documents US4341071, FR2664651, US3937588 et EP1555438, des procédés de commande sont décrits.

Objet et résumé de l'invention

La présente invention répond notamment à ce besoin en proposant un procédé de génération d'une commande de débit de carburant destiné à être injecté dans une chambre de combustion d'une turbomachine propulsant un aéronef, ce procédé comprenant, lors d'une phase de démarrage de la turbomachine :

- une étape de génération, en boucle ouverte, d'une commande du débit de carburant à partir d'au moins une loi préétablie ; et
- une étape de surveillance, en boucle fermée, d'au moins un paramètre de fonctionnement de la turbomachine sélectionné parmi :

  ◦ un taux d'accélération d'un compresseur de la turbomachine, et
  ◦ une température en sortie d'une turbine de la turbomachine, cette étape de surveillance comprenant le maintien du paramètre de fonctionnement dans une plage de valeurs déterminée, à l'aide d'au moins un réseau correcteur associé à ce paramètre et apte à fournir un signal de correction de la commande de débit de carburant générée en boucle ouverte permettant de maintenir le paramètre de fonctionnement dans la plage de valeurs déterminée.

Corrélativement, l'invention vise aussi un dispositif de génération d'une commande de débit de carburant destiné à être injecté dans une chambre de combustion d'une turbomachine propulsant un aéronef, ce dispositif comprenant des moyens, activés lors d'une phase de démarrage de la turbomachine, comportant :

- un module de génération en boucle ouverte d'une commande du débit de carburant à partir d'au moins une loi préétablie ;
- un module de surveillance en boucle fermée d'au moins un paramètre de fonctionnement de la turbomachine sélectionné parmi :

  ◦ un taux d'accélération d'un compresseur de la turbomachine, et
  ◦ une température en sortie d'une turbine de la turbomachine,

ce module de surveillance étant apte à maintenir le paramètre de fonctionnement dans une plage de valeurs déterminée, et comprenant au moins un réseau correcteur associé à ce paramètre et apte à fournir un signal de correction de la commande de débit de carburant générée en boucle ouverte permettant de maintenir le paramètre de fonctionnement dans la plage de valeurs déterminée, et des moyens de correction activés le cas échéant de la commande de débit carburant générée par le module de génération à l'aide du signal de correction fourni par le réseau correcteur.

L'invention propose donc d'introduire une régulation en boucle fermée du débit de carburant destiné à être injecté dans la chambre de combustion de la turbomachine, permettant de contenir certains paramètres de fonctionnement de la turbomachine judicieusement sélectionnés dans une plage de valeurs déterminée de sorte à maintenir la turbomachine dans des conditions d'opérabilité.

De tels paramètres de fonctionnement sont typiquement le taux d'accélération d'un compresseur de la turbomachine et la température en sortie de la turbine de la turbomachine.

L'invention définit ainsi un couloir de contrôle (ou de manière équivalente une plage de valeurs autorisées) autour de la loi de régulation classiquement utilisée en boucle ouverte : tant que les paramètres de fonctionnement de la turbomachine gardent une valeur courante contenue dans ce couloir, on utilise pour la régulation en débit de carburant les commandes générées à partir des lois de commande classiques envisagées pour une régulation de ce débit carburant en boucle ouverte. En revanche, dès que la valeur courante d'un de ces paramètres de fonctionnement sort ou est susceptible de sortir de ce couloir, une boucle de contrôle est mise en oeuvre conformément à l'invention pour corriger (i.e. ajuster) le débit de carburant établi à partir de ces lois de commande classiques en boucle ouverte, de sorte à ramener le cas échéant et à maintenir ces valeurs des paramètres de fonctionnement dans le couloir de contrôle.

Conformément à l'invention, la régulation en boucle fermée du débit de carburant mise en oeuvre n'est donc pas une boucle de régulation pleine autorité : elle est opérationnelle uniquement lorsque certains paramètres de fonctionnement de la turbomachine franchissent ou s'apprêtent à franchir des valeurs de consigne préétablies, déduites des limites d'opérabilité de la turbomachine.

A cet effet, la régulation en boucle fermée proposée par l'invention s'appuie avantageusement sur des réseaux correcteurs associés au(x) paramètre(s) de fonctionnement surveillé(s), et plus précisément sur les signaux de correction fournis en cas de besoin par ces réseaux correcteurs et qui sont destinés à permettre le maintien des paramètres de fonctionnement dans le couloir de contrôle envisagé. Ces signaux de correction sont appliqués à la commande générée en boucle ouverte, de sorte que la commande ainsi corrigée permet d'assurer le maintien des valeurs de fonctionnement dans la plage de valeurs définissant le couloir de contrôle.

L'invention est par conséquent particulièrement originale en ce qu'elle propose, pour la régulation du débit de carburant injecté dans la chambre de combustion de la turbomachine, de s'appuyer sur une commande principale générée en boucle ouverte, ajustée si nécessaire via une boucle fermée s'appuyant sur des réseaux correcteurs aptes à assurer que le taux d'accélération du compresseur et/ou la température en sortie de la turbine soient contenus dans une plage de valeurs prédéterminées de sorte à garantir l'opérabilité de la turbomachine.

Autrement dit, l'invention est relativement facile à mettre en oeuvre. Elle ne nécessite pas de connaître l'évolution des paramètres de fonctionnement en fonction du débit de carburant injecté, mais uniquement de définir des gabarits de contrôle pour ces paramètres de fonctionnement, c'est-à-dire des plages de valeurs dans lesquelles ces paramètres de fonctionnement doivent se trouver, ce qui est particulièrement simple à mettre en oeuvre.

L'invention peut par conséquent s'intégrer très facilement dans les architectures de commande existantes, basées sur une régulation du débit carburant en boucle ouverte.

Elle permet de bénéficier des avantages résultant d'une régulation du débit de carburant en boucle fermée (efficacité, meilleure précision) tout en garantissant une simplicité et une facilité de mise en oeuvre.

Les paramètres de fonctionnement considérés pour la régulation en boucle fermée proposée par l'invention sont notamment un taux d'accélération d'un compresseur de la turbomachine (ex. compresseur haute-pression pour une turbomachine double corps) et une température en sortie de la turbine de la turbomachine, aussi connue sous le nom de température EGT pour Exhaust Gaz Temperature.

De façon connue en soi, de tels paramètres de fonctionnement sont déjà mesurés à l'aide de capteurs de l'aéronef ou de la turbomachine, ou en variante évalués à partir de mesures provenant de tels capteurs, et participent à la surveillance et au contrôle de la turbomachine opérés par le système de régulation pleine autorité de l'aéronef, connu également sous le nom de FADEC (Full Authority Digital Engine Control). Il n'est donc pas nécessaire d'introduire de nouveaux capteurs à bord de l'aéronef ou de la turbomachine pour mettre en oeuvre l'invention.

La surveillance du taux d'accélération permet avantageusement de détecter une stagnation ou un pompage de la turbomachine.

Ainsi, préférentiellement au cours de l'étape de surveillance, on maintient le taux d'accélération du compresseur de la turbomachine entre une valeur de consigne d'accélération minimale (pour éviter un risque de stagnation) et une valeur de consigne d'accélération maximale (pour éviter un risque de pompage) à l'aide de deux réseaux correcteurs distincts.

La surveillance de la température en sortie de la turbine permet quant à elle de détecter un comportement à risque de la turbomachine, susceptible de nécessiter une interruption du démarrage.

Afin d'éviter une telle interruption, au cours de l'étape de surveillance, on maintient préférentiellement la température en sortie de la turbine de la turbomachine inférieure à une valeur de consigne de température maximale.

Bien entendu, l'invention ne se limite pas aux paramètres de fonctionnement précités, à savoir le taux d'accélération et la température en sortie de la turbine, et on peut envisager de surveiller également d'autres paramètres de fonctionnement en plus des paramètres précités ayant un impact sur le comportement de la turbomachine au démarrage, comme par exemple la pression de la chambre de combustion.

Dans un mode particulier de réalisation dans lequel on surveille à la fois le taux d'accélération du compresseur et la température en sortie de la turbine, l'étape de surveillance comprend la sélection d'un signal parmi les signaux de correction générés par les réseaux correcteurs associés au taux d'accélération du compresseur et à la température en sortie de la turbine, le signal sélectionné étant utilisé pour corriger la commande de débit carburant générée en boucle ouverte.

Corrélativement, dans un mode particulier de réalisation, le module de surveillance comprend une pluralité de réseaux correcteurs et des moyens de sélection d'un signal de correction parmi les signaux de corrections fournis par ces réseaux correcteurs, le signal sélectionné étant fourni aux moyens de correction pour corriger la commande de débit de carburant généré en boucle ouverte par le module de génération.

Il convient de noter qu'à un instant donné, tous les réseaux correcteurs ne fournissent pas nécessairement un signal de correction (i.e. les réseaux correcteurs n'ont pas besoin d'être activés en permanence). Cela dépend notamment de la valeur courante du paramètre de fonctionnement surveillé par chaque réseau correcteur, qui peut être dans la plage de valeurs acceptées (c'est-à-dire « valides », « autorisées ») pour ce paramètre et permettant l'opérabilité de la turbomachine, de sorte qu'aucune correction de la commande de débit carburant générée en boucle ouverte n'est à proprement parler requise.

La sélection réalisée le cas échéant au cours de l'étape de surveillance permet de hiérarchiser les signaux de correction fournis par les différents réseaux correcteurs de sorte à limiter en particulier les divergences susceptibles d'apparaître entre ces signaux de correction.

Cette sélection est par exemple assurée par une succession de composants aptes à sélectionner la valeur minimale ou la valeur maximale des signaux présents à leurs entrées, et judicieusement agencés entre les sorties des réseaux correcteurs.

A titre illustratif, dans certaines situations, il peut s'avérer qu'à la fois la température en sortie de la turbine et le taux d'accélération du compresseur sortent tous les deux de leurs couloirs de contrôle respectifs. Notamment, il peut arriver que le taux d'accélération du compresseur s'approche d'une valeur de consigne minimale traduisant une stagnation anormale de la turbomachine, tandis que la température en sortie de la turbine s'apprête à dépasser une valeur de consigne maximale.

Dans une telle situation, il convient de sélectionner le signal de correction le plus approprié parmi les signaux de correction fournis par les réseaux correcteurs.

Préférentiellement à cet effet, on s'efforce de privilégier les consignes hautes, c'est-à-dire que le signal de correction sélectionné est le signal de correction généré par le réseau correcteur associé à la température en sortie de turbine, et qui fournit un signal de correction permettant de maintenir la valeur de la température en sortie de turbine inférieure à une valeur de consigne maximale.

On s'assure de cette sorte de ne pas endommager irrémédiablement la turbomachine en raison d'une surchauffe qui peut s'avérer fatale.

Dans un mode particulier de réalisation, chaque réseau correcteur est de type proportionnel intégral (par exemple, proportionnel intégral PI de classe 1 ou proportionnel double intégral PI-I), et est apte à délivrer un signal de correction de la commande de débit carburant évalué à partir d'une différence entre une valeur courante du paramètre de fonctionnement auquel il est associé et une valeur de consigne déterminée.

Ce mode de réalisation est relativement simple à mettre en oeuvre via l'ajustement des paramètres de chaque réseau correcteur (ex. gain, activation du réseau, etc.). Ainsi, le gain de chaque réseau peut dépendre notamment d'une pression statique dans la chambre de combustion et d'une pression totale en entrée d'une soufflante de la turbomachine.

Dans un mode privilégié de réalisation, les moyens de régulation comprennent un réseau correcteur par paramètre surveillé et par valeur de consigne établie pour ce paramètre.

Ainsi, à titre illustratif, si l'on considère comme paramètres de fonctionnement le taux d'accélération d'un compresseur de la turbomachine et la température EGT, et que le module de surveillance du dispositif est configuré pour maintenir le taux d'accélération du compresseur entre une valeur de consigne d'accélération minimale et une valeur de consigne d'accélération maximale, et la température EGT inférieure à une valeur de consigne de température maximale, le dispositif de génération selon l'invention peut comprendre trois réseaux correcteurs.

Lorsque le dispositif de régulation comprend plusieurs réseaux correcteurs, ces réseaux correcteurs peuvent avantageusement partager un même intégrateur commun, préférentiellement saturé.

Cette saturation de l'intégrateur commun peut être réalisée par exemple en fonction de la commande du débit de carburant générée en boucle ouverte.

Ceci permet de diminuer la complexité et les coûts liés à l'implémentation de l'invention.

La saturation de l'intégrateur commun permet en outre de limiter les signaux de correction fournis par les réseaux correcteurs.

Cet intégrateur commun peut également être utilisé par la boucle ouverte de sorte à limiter les discontinuités pouvant apparaître entre les commandes de débit de carburant.

Corrélativement, dans un mode particulier de réalisation, le procédé de génération comprend en outre une étape de saturation de la commande générée en boucle ouverte ou de la commande générée en boucle ouverte corrigée à l'aide du signal de correction, cette saturation dépendant de la loi nominale.

Cette saturation est par exemple définie à partir d'un pourcentage déterminé de la loi nominale.

Cette étape de saturation permet de borner les commandes de débit carburant utilisées pour la régulation de la turbomachine au démarrage.

Elle peut être envisagée notamment lorsque l'on souhaite limiter le débit de carburant injecté dans la chambre de combustion, par exemple pour rester dans les limites d'injection de carburant prévu par le dispositif de dosage de la turbomachine.

Cette étape de saturation permet également de garantir que les commandes utilisées pour la régulation en débit de carburant de la turbomachine ne sont pas divergentes voire aberrantes, notamment lorsque la turbomachine est défaillante.

Cette étape de saturation peut forcer la commande générée en boucle ouverte, soumise ou non à une étape d'ajustement, à prendre l'une ou l'autre parmi une première valeur limite et une deuxième valeur limite correspondant respectivement à un pourcentage minimum et à un pourcentage maximum de la commande générée en boucle ouverte et non soumise à ladite étape d'ajustement, si la valeur courante de la commande générée en boucle ouverte est respectivement inférieure à la première valeur limite ou supérieure à la deuxième valeur limite.

Dans un mode particulier de réalisation, les différentes étapes du procédé de génération sont déterminées par des instructions de programmes d'ordinateurs.

En conséquence, l'invention vise aussi un programme d'ordinateur sur un support d'informations, ce programme étant susceptible d'être mis en oeuvre dans un dispositif de génération ou plus généralement dans un ordinateur, ce programme comportant des instructions adaptées à la mise en oeuvre des étapes d'un procédé de génération tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

L'invention vise également une turbomachine comprenant un dispositif de génération selon l'invention.

Ce dispositif de génération est préférentiellement intégré au système de régulation pleine autorité de l'aéronef.

La turbomachine selon l'invention bénéficie des mêmes avantages que ceux cités précédemment pour le procédé et le dispositif de génération.

On peut également envisager, dans d'autres modes de réalisation, que le procédé de génération, le dispositif de génération et la turbomachine selon l'invention présentent en combinaison tout ou partie des caractéristiques précitées.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente une turbomachine et un dispositif de génération conformes à l'invention, dans un mode particulier de réalisation ;
- la figure 2 illustre schématiquement l'architecture matérielle du dispositif de génération de la figure 1 ;
- la figure 3 représente, sous forme d'ordinogramme, les principales étapes d'un procédé de génération mis en oeuvre par le dispositif de génération de la figure 1 ;
- la figure 4 représente une architecture de contrôle pouvant être utilisée par le dispositif de génération de la figure 1 pour la mise en oeuvre des étapes représentées à la figure 3 ; et
- les figures 5A et 5B illustrent des exemples de réseaux correcteurs pouvant être implémentés par le dispositif de génération.

Description détaillée de l'invention

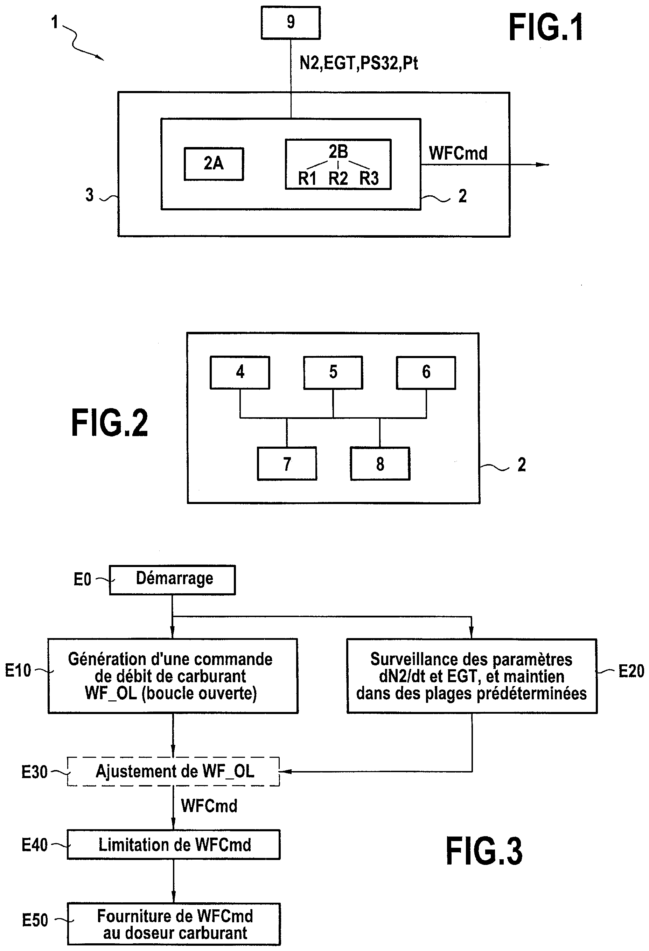

La **figure 1** représente de façon schématique, une turbomachine 1 conforme à l'invention dans son environnement, dans un mode particulier de réalisation.

Dans ce mode de réalisation, la turbomachine 1 est un turboréacteur double corps double flux propulsant un avion. Toutefois l'invention s'applique à d'autres turbomachines telles que par exemple à un turboréacteur mono corps ou à un turbopropulseur, ainsi qu'à d'autres types d'aéronefs.

De façon connue en soi, le turboréacteur 1 est équipé d'un dispositif de dosage de carburant, aussi communément appelé doseur carburant, apte à régler la quantité de carburant venant du circuit carburant de l'avion et fournie par le système d'injection de carburant de la chambre de combustion du turboréacteur. Le doseur carburant, le circuit carburant et le système d'injection de carburant de la chambre de combustion du turboréacteur 1 ne sont pas représentés sur la figure 1 par souci de simplification.

Le doseur carburant du turboréacteur 1 est ici muni d'un tiroir ou vanne de dosage FMV (pour Fuel Metering Valve), dont la position varie en fonction du débit de carburant devant être injecté dans la chambre de combustion. Le débit de carburant devant être injecté dans la chambre de combustion est transmis au doseur carburant sous la forme d'une commande WFCmd, via une boucle d'asservissement.

Cette commande de débit carburant WFCmd est établie par un dispositif 2 de génération conforme à l'invention, intégré dans le mode de réalisation envisagé ici, dans le système de régulation pleine autorité 3 (FADEC) de l'avion.

Pour établir cette commande, le dispositif 2 de régulation s'appuie sur deux entités fonctionnelles principales :

- un module de génération 2A, apte à générer en boucle ouverte une commande WF_OL de débit carburant à partir d'une loi ou d'un réseau de lois de régulation préétablies en fonction du régime de rotation réduit courant du turboréacteur 1 ; et
- un module de surveillance 2B, apte à surveiller en boucle fermée des paramètres de fonctionnement du turboréacteur 1, et à maintenir via cette boucle fermée ces paramètres de fonctionnement dans une plage de valeurs prédéterminée grâce à divers réseaux correcteurs désignés par R1, R2, R3. Ces réseaux correcteurs sont aptes à fournir le cas échéant des signaux de correction permettant au module de surveillance 2B de moduler (c'est-à-dire d'ajuster, de corriger) la commande WF_OL générée par le module 2A, de sorte que les valeurs courantes des paramètres de fonctionnement du turboréacteur résultant de l'application de la commande ajustée par le dispositif de dosage restent contenues dans la plage de valeurs précitée.

Dans l'exemple décrit ici, on envisage la surveillance par le module 2B, à l'aide des réseaux correcteurs R1, R2 et R3, de deux paramètres de fonctionnement du turboréacteur 1 à savoir :

- le taux d'accélération, noté $(dN2/dt)$, du compresseur haute-pression du turboréacteur 1, obtenu en dérivant par rapport au temps la vitesse N2 de rotation de ce compresseur haute-pression ; et
- la température des gaz, notée EGT, en sortie de la turbine du turboréacteur 1.

Toutefois, aucune limitation n'est attachée au nombre de paramètres de fonctionnement du turboréacteur surveillés conformément à l'invention, et on peut envisager, dans d'autres modes de réalisation, de ne contrôler que le taux d'accélération d'un compresseur du turboréacteur 1, ou en variante, de contrôler d'autres paramètres de fonctionnement en plus du taux d'accélération d'un compresseur du turboréacteur et/ou de la température des gaz en sortie de la turbine du turboréacteur.

Dans le mode de réalisation décrit ici, les modules fonctionnels 2A et 2B décrits précédemment sont des modules logiciels implémentés par le dispositif 2 de génération dans le cadre de la logique de régulation du turboréacteur 1 mise en oeuvre par le FADEC 3.

A cet effet, le dispositif 2 de génération possède l'architecture matérielle d'un ordinateur, telle qu'illustrée schématiquement à la **figure 2**. Il comprend notamment un processeur 4, une mémoire vive 5, une mémoire morte 6, une mémoire flash non volatile 7, ainsi que des moyens de communication 8, éventuellement partagés avec d'autres unités de régulation du FADEC 3.

Les moyens de communication 8 comprennent des moyens de communication avec divers capteurs 9 équipant l'avion, et aptes à fournir au dispositif 2 de génération, des mesures des valeurs courantes de la vitesse de rotation N2 du compresseur haute-pression du turboréacteur 1, de la température EGT des gaz en sortie de la turbine du turboréacteur 1, ainsi que de la pression statique PS32 dans la chambre de combustion et de la pression totale Pt en entrée de la soufflante du turboréacteur 1.

Les capteurs 9 sont par exemple un capteur de vitesse, un capteur de température et des capteurs de pression positionnés de sorte à mesurer les paramètres N2, EGT, PS32 et Pt, et connus en soi.

Les mesures délivrées par ces capteurs 9 permettent notamment au dispositif 2 de génération d'estimer une valeur courante du taux d'accélération (dN2/dt), de façon connue en soi, par dérivation de la vitesse de rotation N2, et de surveiller les paramètres (dN2/dt) et EGT conformément à l'invention.

La mémoire morte 6 du dispositif de génération 2 constitue un support d'enregistrement conforme à l'invention, lisible par le processeur 4 et sur lequel est enregistré un programme d'ordinateur conforme à l'invention, comportant des instructions pour l'exécution des étapes d'un procédé de génération conforme à l'invention décrites maintenant en référence à la figure 3.

La **figure 3** illustre, sous forme d'ordinogramme, les principales étapes du procédé de génération selon l'invention dans un mode particulier de réalisation dans lequel il est mis en oeuvre par le dispositif 2 de génération de la figure 1, pour la régulation en débit carburant du turboréacteur 1.

Un tel procédé s'applique de façon privilégiée lors d'une phase de démarrage du turboréacteur 1.

On suppose donc ici que le turboréacteur 1 se trouve dans une phase de démarrage (étape E0). Cette phase de démarrage faisant suite à une commande spécifique appliquée au turboréacteur 1, peut être détectée aisément de façon connue en soi.

Il convient de noter que l'invention s'applique à tout type de démarrage du turboréacteur 1 : il peut s'agir d'un démarrage au sol du turboréacteur 1 suite à une extinction de longue durée, comme d'un redémarrage en vol, ou d'un rallumage du turboréacteur 1 suite à une extinction de courte durée.

Conformément à l'invention, le dispositif de génération 2 du FADEC 3 implémente, lors de cette phase de démarrage du turboréacteur 1, une régulation dite « principale » en boucle ouverte du débit de carburant devant être injecté dans la chambre de combustion du turboréacteur 1, par l'intermédiaire du module 2A (étape E10).

Plus spécifiquement, au cours de cette étape E10, le module 2A génère une commande de débit de carburant WF_OL à partir d'une loi ou d'un réseau de lois préétablies LN. Ce réseau de lois établit, en fonction d'un régime de rotation réduit du turboréacteur 1, une commande (i.e. valeur) de débit de carburant devant être fournie au doseur de carburant du turboréacteur 1.

Un tel réseau de lois est connu en soi et a été décrit précédemment. Il s'appuie notamment sur une première loi destinée à assurer l'allumage de la chambre de combustion, et fournissant une commande de débit de carburant en fonction du régime réduit du compresseur, et sur une seconde butée en C/P permettant de gérer la phase d'enroulement du turboréacteur jusqu'au ralenti. La façon dont sont élaborées et prises en compte de telles lois de commande est connue de l'homme du métier et ne sera pas décrite davantage ici.

La commande WF_OL est, dans l'état de la technique, destinée à être fournie en l'état au doseur carburant du turboréacteur 1.

Au contraire, conformément à l'invention, en marge de cette régulation en boucle ouverte réalisée à l'aide de la commande WF_OL, le dispositif 2 de génération, par l'intermédiaire du module 2B, surveille les valeurs courantes du taux d'accélération (dN2/dt) du compresseur haute-pression du turboréacteur 1 et de la température EGT en sortie de la turbine (étape E20).

Ces valeurs courantes sont les valeurs du taux d'accélération dN2/dt et de la température EGT résultant de la régulation du débit de carburant opérée par le FADEC à partir de la commande WF_OL générée par le module 2A, non corrigée tout du moins au démarrage du procédé.

Ces valeurs courantes sont obtenues par le module 2B, à partir de mesures réalisées par les capteurs 9 de vitesse et de température de l'avion, par exemple de façon périodique, des valeurs courantes de la vitesse N2 de rotation du corps haute-pression et de la température EGT en sortie de la turbine. Le module 2B dérive ensuite par rapport au temps la mesure courante de la vitesse N2 afin d'estimer une valeur courante du taux d'accélération dN2/dt.

Conformément à l'invention ces valeurs courantes du taux d'accélération dN2/dt et de la température EGT sont surveillées par le module 2B, c'est-à-dire analysées et le cas échéant traitées.

Plus spécifiquement, au cours de l'étape de surveillance E20, le module 2B maintient via une boucle fermée, grâce aux réseaux correcteurs R1, R2 et R3 judicieusement paramétrés et agencés entre eux, les valeurs courantes du taux d'accélération dN2/dt et de la température EGT dans une plage de valeurs déterminées (aussi appelée couloir de contrôle dans la description).

Ce maintien est assuré par le biais de signaux de correction fournis par les réseaux correcteurs R1, R2 et R3, et utilisés par le module de surveillance 2B pour ajuster (i.e. corriger ou moduler) la commande WL_OL générée par le module 2A (étape E30).

Il convient de noter que l'ajustement de la commande WL_OL n'est pas systématique (d'où sa représentation en pointillés sur la figure 3) : il n'est en définitive réalisé que lorsqu'il s'avère nécessaire pour maintenir le taux d'accélération dN2/dt et la température EGT dans la plage de valeurs que l'on s'est fixée pour assurer l'opérabilité du turboréacteur 1.

Autrement dit, la boucle fermée mise en place par le module de surveillance 2B n'est pas une boucle fermée pleine autorité : la commande principale de régulation du doseur carburant est la commande WF_OL fournie par le module 2A, qui est modulée de façon accessoire par le module de surveillance 2B pour maintenir les valeurs des paramètres de fonctionnement surveillés dans les plages de valeurs souhaitées.

Dans le mode de réalisation décrit ici, les plages de valeurs considérées pour le taux d'accélération (dN2/dt) et la température EGT sont définies comme suit.

La plage de valeurs considérée pour le taux d'accélération est définie par une valeur de consigne minimale THR1, fixée (par exemple par le service en charge de l'opérabilité du turboréacteur 1) de sorte à éviter une stagnation du turboréacteur 1 (i.e. la consigne THR1 traduit une valeur de taux d'accélération en dessous de laquelle le turboréacteur 1 est considéré comme stagnant anormalement), et par une valeur de consigne maximale THR2, représentant une valeur de taux d'accélération au-dessus de laquelle on considère que le turboréacteur 1 accélère trop rapidement de sorte qu'il existe un risque de pompage de ce turboréacteur.

Il convient de noter que la limite de pompage du turboréacteur est difficilement transposable en une valeur de consigne maximale du taux d'accélération, si bien que dans le mode de réalisation décrit ici, on détermine cette valeur de consigne maximale THR2 par apprentissage. On utilise à cet effet un détecteur de pompage, qui mémorise chaque événement de pompage du turboréacteur 1 ainsi que les conditions dans lesquelles ce tel pompage a eu lieu, et met à jour, pour chaque événement ainsi détecté, la valeur seuil THR2 en fonction de ces conditions. Un tel mécanisme d'élaboration de la valeur seuil THR2 est décrit plus en détail dans la demande de brevet français n°1151778 non publiée encore à ce jour.

La plage de valeurs considérée pour la température EGT est définie par une limite haute uniquement, c'est-à-dire par une valeur de consigne de température maximale THR3. Cette valeur de consigne est fixée par exemple par le service en charge de l'opérabilité du turboréacteur 1 de sorte à limiter les risques d'interruption forcée du turboréacteur 1 du fait d'une température trop élevée.

Comme décrit précédemment, dans le mode de réalisation décrit ici, l'ajustement de la commande WF_OL est réalisé par le module de surveillance 2B à partir de signaux de correction fournis par les réseaux correcteurs R1, R2 et R3 de type proportionnel intégral (PI) ou double intégral (PI-I) (désigné plus généralement dans cette description par réseaux correcteurs de type proportionnel intégral).

Plus spécifiquement, le réseau correcteur R1 est destiné ici à corriger la commande WF_OL de débit de carburant de sorte à maintenir la valeur courante du taux d'accélération du compresseur haute pression au-dessus de la valeur de consigne minimale THR1 en deçà de laquelle il existe un risque de stagnation du turboréacteur 1.

A cet effet, le réseau correcteur R1 est apte à fournir un signal de correction désigné par SIG1 destiné à être ajouté à la commande WL_OL.

Dans l'exemple envisagé ici, le réseau correcteur R1 est un réseau proportionnel double intégral (ou intégrateur PI-I), dont la fonction de transfert $C1(p)$, $p$ désignant la variable de Laplace, est donnée par :

$$C1(p) = \frac{K1(1 + \tau 1.p)}{p^2} = \frac{C1'(p)}{p}$$

$K1$ et $\tau 1$ désignant respectivement des paramètres du réseau correcteur R1. Ces paramètres $K1$ et $\tau 1$ du réseau correcteur R1 dépendent de l'état du turboréacteur 1 ; plus particulièrement ici, le gain $K1$ dépend de la pression statique PS32 dans la chambre de combustion du turboréacteur et de la pression totale Pt en entrée de la soufflante de la turbomachine, tandis que le paramètre $\tau 1$ est fixé en fonction de l'inertie du turboréacteur 1 en réaction à un débit de carburant injecté dans sa chambre de combustion. Les valeurs courantes des pressions PS32 et Pt sont fournies au réseau correcteur R1 par les capteurs 9.

Le signal de correction SIG1 est obtenu en appliquant la fonction de transfert $C1(p)$ au signal d'erreur noté $\delta 1$ entre la valeur de consigne minimale THR1 et la valeur courante de dN2/dt, autrement dit :

$$\delta 1 = THR1 - (dN2/dt).$$

Bien entendu, d'autres paramètres peuvent être pris en compte pour fixer $K1$ et $\tau 1$.

Ainsi, le réseau correcteur R1 fait correspondre à un signal d'erreur δ1 entre une valeur courante du taux d'accélération et sa consigne minimale THR1, un delta de débit de carburant SIG1, destiné à faire disparaître cette erreur 51, autrement dit, destiné à permettre au taux d'accélération du compresseur haute-pression du turboréacteur 1 de retrouver une valeur « normale » (i.e. dans les limites du couloir de contrôle qu'on lui a fixé).

De façon similaire, le réseau correcteur R2 est destiné ici à corriger la commande WF_OL de débit de carburant de sorte à maintenir la valeur courante du taux d'accélération du compresseur haute pression en dessous de la valeur de consigne maximale THR2 au-delà de laquelle il existe un risque de pompage du turboréacteur 1.

A cet effet, le réseau correcteur R2 est apte à fournir un signal de correction désigné par SIG2 destiné à être ajouté à la commande WL_OL.

Dans l'exemple envisagé ici, le réseau correcteur R2 est également un réseau proportionnel double intégral (PI-I), dont la fonction de transfert *C2(p)* est donnée par :

$$C2(p) = \frac{K2(1 + \tau2.p)}{p^2} = \frac{C2'(p)}{p}$$

*K2* et *τ2* désignant respectivement les paramètres du réseau correcteur R2. Ces paramètres *K2* et *τ2* du réseau correcteur R2 dépendent de l'état du turboréacteur 1 ; plus particulièrement ici, le gain *K2* dépend de la pression statique PS32 et de la pression totale Pt en entrée de la soufflante de la turbomachine, tandis que *τ2* est fixé en fonction de l'inertie du turboréacteur 1 en réaction à un débit de carburant injecté dans sa chambre de combustion.

Le signal de correction SIG2 est obtenu en appliquant la fonction de transfert *C2(p)* au signal d'erreur noté δ2 entre la valeur de consigne maximale THR2 et la valeur courante de dN2/dt, autrement dit :

$$\delta2 = THR2 - (dN2/dt).$$

Bien entendu, d'autres paramètres peuvent être pris en compte pour fixer *K2* et *τ2*.

Ainsi, le réseau correcteur R2 fait correspondre à un signal d'erreur δ2 entre une valeur courante du taux d'accélération et sa consigne maximale THR2, un delta de débit de carburant SIG2, destiné à faire disparaître cette erreur δ2, autrement dit, destiné à permettre au taux d'accélération du compresseur haute-pression du turboréacteur 1 de retrouver une valeur « normale » (i.e. dans les limites du couloir de contrôle qu'on lui a fixé).

Enfin, le réseau correcteur R3 est destiné ici à corriger la commande WF_OL de débit de carburant de sorte à maintenir la valeur courante de la température EGT en dessous de la valeur de consigne maximale de température THR3 au-delà de laquelle il existe un risque non négligeable de devoir interrompre le démarrage du turboréacteur 1.

A cet effet, le réseau correcteur R3 est apte à fournir un signal de correction désigné par SIG3 destiné à être ajouté à la commande WL_OL.

Dans l'exemple envisagé ici, le réseau correcteur R3 est également un réseau proportionnel intégral (PI), dont la fonction de transfert *C3(p)* est donnée par :

$$C3(p) = \frac{K3(1 + \tau3.p)}{p} = \frac{C3'(p)}{p}$$

*K3* et *τ3* désignant respectivement les paramètres du réseau correcteur R3. Ces paramètres *K3* et *τ3* du réseau correcteur R3 dépendent de l'état du turboréacteur 1 ; plus particulièrement ici, le gain *K3* dépend de la pression statique PS32 et de la pression totale Pt en entrée de la soufflante de la turbomachine, tandis que *τ3* est fixé en fonction de l'inertie du turboréacteur 1 en réaction à un débit de carburant injecté dans sa chambre de combustion.

Le signal de correction SIG3 est obtenu en appliquant la fonction de transfert *C3(p)* au signal d'erreur noté δ3 entre la valeur de consigne maximale THR3 et la valeur courante de EGT, autrement dit :

$$\Delta3 = THR3 - EGT.$$

Bien entendu, d'autres paramètres peuvent être pris en compte pour fixer *K3* et *τ3*.

Ainsi, le réseau correcteur R3 fait correspondre à un signal d'erreur δ3 entre une valeur courante de la température EGT et sa consigne maximale THR3, un delta de débit de carburant SIG3, destiné à faire disparaître cette erreur 53, autrement dit, destiné à permettre à l'a température EGT du turboréacteur 1 d'être maintenue à une valeur « normale » (i.e. dans les limites du couloir de contrôle qu'on lui a fixé).

Dans le mode de réalisation décrit ici, le module de surveillance 2B établit une hiérarchie entre les signaux de correction SIG1, SIG2 et SIG3 fournis par les réseaux correcteurs R1, R2 et R3. Autrement dit, il sélectionne à un instant donné le signal de correction parmi les signaux SIG1, SIG2 et SIG3 qui sera utilisé pour ajuster la commande WF_OL.

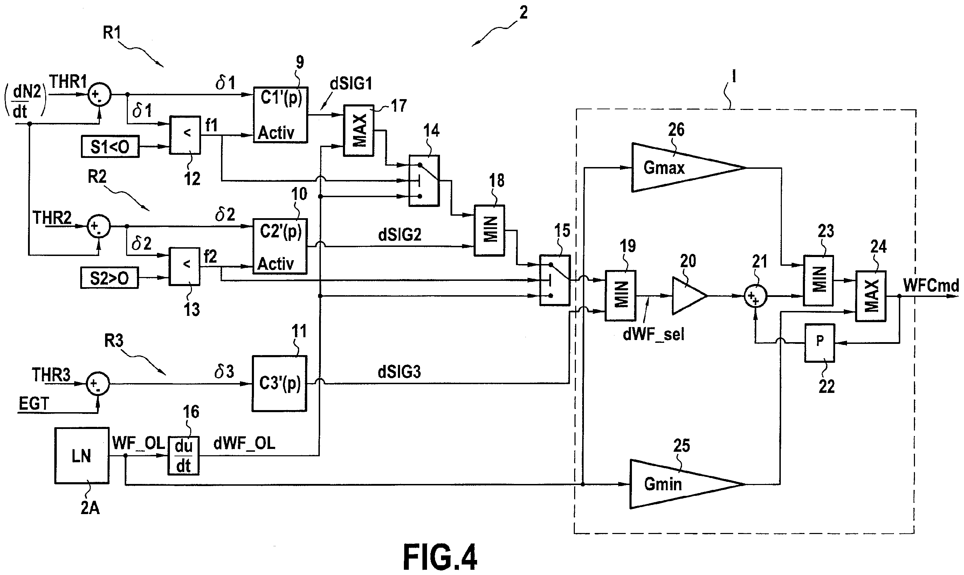

Cette sélection est assurée ici par une chaîne de fonctions de type min/max (i.e. de minimisation ou de maximisation), appliquées en sortie des réseaux correcteurs, deux à deux. Un exemple de telles fonctions est décrit plus en détail en référence à la figure 4.

Ces fonctions permettent de privilégier un signal de correction par rapport à un autre pour ajuster la commande WF_OL. Préférentiellement, on privilégie le respect des consignes hautes par les paramètres de fonctionnement surveillés, c'est-à-dire, le respect des consignes THR2 et THR3. Ce qui signifie en d'autres mots, que si à la fois un signal de correction SIG1 est fourni par le réseau correcteur R1 et un signal de correction SIG3 est fourni par le réseau correcteur R3, on sélectionne préférentiellement pour ajuster la commande WF_OL le signal de correction SIG3.

On note WFCmd, la commande de débit de carburant résultant le cas échéant de l'étape E30 d'ajustement (WFCmd=WF_OL si aucun ajustement n'est nécessaire).

Dans le mode de réalisation décrit ici, le dispositif de génération 2 met en oeuvre une étape de saturation de la commande WFCmd avant de la fournir au doseur carburant. Cette saturation dépend de la commande WF_OL établie par le module 2A, et est établie en appliquant respectivement un gain Gmin et un gain Gmax à la commande WF_OL (étape E40).

Cette saturation vise à s'assurer que la commande WFCmd est bien comprise entre deux valeurs limites dérivées de la commande WF_OL (ces valeurs limites correspondent par exemple à un pourcentage de la commande WF_OL défini par les gains Gmin et Gmax).

A cet effet, la commande WFCmd est saturée le cas échéant à Gmin x WF_OL ou à Gmax x WF_OL en fonction de sa valeur courante, i.e. si la commande WFCmd est inférieure à Gmin x WF_OL, on force sa valeur à Gmin x WF_OL ; au contraire, si la commande WFCmd est supérieure à Gmax x WF_OL, on force sa valeur à cette valeur Gmax x WF_OL.

Il s'agit par ce biais de s'assurer notamment qu'aucune commande ayant une valeur aberrante n'est transmise au doseur carburant (ce qui pourrait être le cas par exemple si le turboréacteur 1 était défaillant), ou tout simplement de confiner la commande transmise au doseur carburant dans un espace de valeurs déterminé, correspondant par exemple aux limites d'injection de carburant prévues par le doseur carburant.

La commande WFCmd saturée le cas échéant est ensuite fournie au doseur carburant (étape E50).

Nous allons maintenant décrire plus en détail en référence à la **figure 4,** l'architecture de contrôle mise en oeuvre dans le mode de réalisation décrit ici par le module de surveillance 2B pour maintenir les valeurs courantes du taux d'accélération (dN2/dt) et de la température EGT dans les plages de valeurs précitées.

Cette architecture de contrôle vient en support des étapes E20, E30 et E40 décrites précédemment consistant en la surveillance des paramètres de fonctionnement du turboréacteur 1, en l'ajustement de la commande générée en boucle ouverte WF_OL par le module 2A, et en la saturation le cas échéant de la commande WFCmd fournie au doseur carburant.

Selon cette architecture, les trois réseaux correcteurs R1, R2 et R3 utilisés par le module 2B pour déterminer la correction appropriée devant être appliquée le cas échéant à la commande WF_OL, partagent un même intégrateur commun saturé I en fonction de la valeur courante de la commande WF_OL.

Ceci est possible compte tenu des fonctions de transfert C1, C2 et C3 définissant ces réseaux, qui peuvent s'écrire sous la forme d'un produit d'une première fonction de transfert C1', C2', C3', mise en oeuvre par le module 9, 10, 11 respectivement, et d'une seconde fonction d'intégration 1/p, mise en oeuvre par l'intégrateur saturé I.

L'usage d'un intégrateur commun saturé permet avantageusement de limiter les discontinuités des consignes de débit carburant délivrées par les réseaux correcteurs R1, R2 et R3, et permet d'implémenter facilement une saturation des commandes issues des boucles fermées (cf. étape E40).

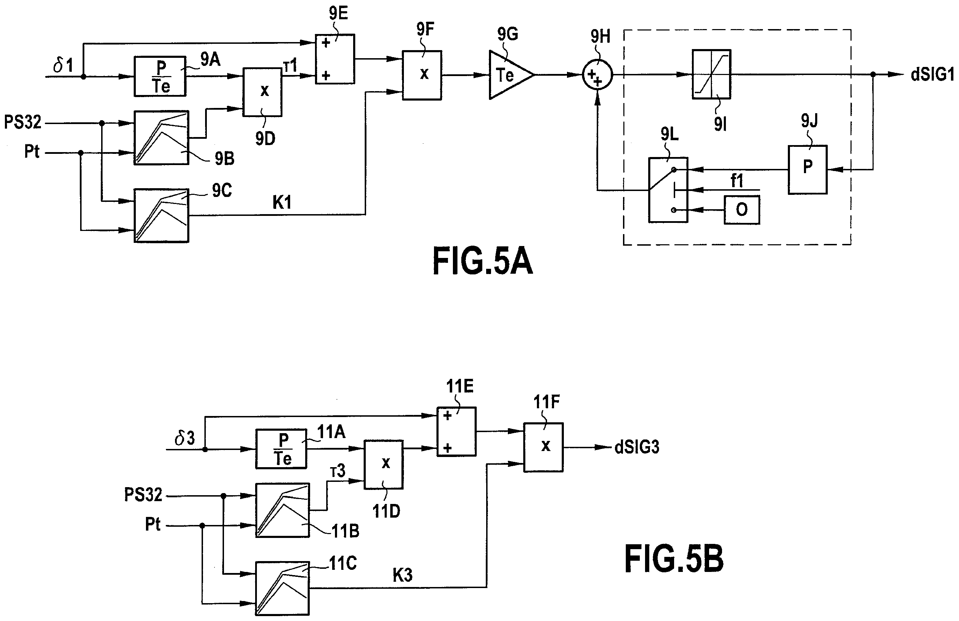

Les modules 9 et 10, implémentant les fonctions de transfert C1 et C2 respectivement, comportent également un second intégrateur, comme illustré à la figure 5A (élément d'intégration 9J), décrite plus en détails ultérieurement. Ce second intégrateur peut être sujet à des problèmes dits de wind-up ou de dérive (ou encore d'emballement), bien connus de l'homme du métier.

Afin de gérer ces problèmes, l'architecture illustrée à la figure 4 propose de n'activer ce second intégrateur que lorsque la valeur courante du taux d'accélération dN2/dt est proche de sa consigne, autrement dit de la valeur THR1 pour le module 9 ou de la valeur THR2 pour le module 10. Cette activation ou désactivation des intégrateurs des modules 9 et 10 est gérée respectivement par les modules 12 et 13.

Plus précisément :

- Le module 12 compare la différence δ1 estimée entre la consigne THR1 et la valeur courante de (dN2/dt) par rapport à un seuil S1 choisi négatif. Si δ1<S1, le module 12 positionne un indicateur booléen f1 à une valeur 1 (ou TRUE), apte à activer l'intégrateur 9J du module 9. Sinon, l'indicateur booléen f1 est positionné à une valeur 0 (ou FALSE) et n'active pas l'intégrateur 9J du module 9.

- De façon similaire, le module 13 compare la différence δ2 estimée entre la valeur de consigne THR2 et la valeur courante de (dN2/dt) par rapport à un seuil S2 choisi positif. Si δ2<S2, le module 12 positionne un indicateur booléen f2 à une valeur 1 (ou TRUE), apte à activer l'intégrateur du module 10. Sinon, l'indicateur booléen f2 est positionné à une valeur 0 (ou FALSE) et maintient l'intégrateur du module 10 inactif.

Les seuils S1 et S2 sont choisis de manière empirique, suffisamment petits de sorte à éviter les problèmes de wind-up mentionnés précédemment.

Du fait de la désactivation possible des intégrateurs des modules 9 et 10 sous certaines conditions, on s'assure également que les valeurs délivrées en sortie des modules 9 et 10 ne puissent être choisies par le dispositif de génération 2 lorsqu'une telle désactivation est effective. Ceci est assuré dans l'architecture représentée à la figure 4 par la prévision de deux modules de sélection (ou switchs) 14 et 15, commandés respectivement par les sorties des modules 12 et 13.

Ainsi, le module de sélection 14 sélectionne la sortie du module 9 uniquement si $\delta1 < S1$ (autrement dit si l'intégrateur 9J du module 9 est activé). De même, le module de sélection 15 ne sélectionne la sortie du module 10 que si $\delta2 < S2$ (autrement dit si l'intégrateur du module 10 est activé).

Si $\delta1 \geq S1$ ou si $\delta2 \geq S2$, les modules de sélection 14 et 15 sélectionnent une valeur obtenue par dérivation par rapport au temps de la commande WF_OL évaluée par le module 2A. Cette dérivation par rapport au temps est réalisée par un module dérivateur 16, connu en soi.

Il convient de noter que du fait de l'utilisateur d'un intégrateur saturé I commun aux trois réseaux correcteurs R1, R2 et R3, la valeur délivrée en sortie des modules 9, 10 et 11 correspond respectivement à une dérivée par rapport au temps des signaux de correction SIG1, SIG2 et SIG3 notée dSIG1, dSIG2 et dSIG3 respectivement (ceci explique également la dérivation de la commande WF_OL par le module dérivateur 16 afin de rendre cette commande comparable aux valeurs manipulées par les modules de sélection 14 et 15).

La sélection de l'une ou l'autre des valeurs dSIG1, dSIG2, dSIG3 ou dWF_OL est assurée par différents modules MIN/MAX 17, 18 et 19. Plus précisément :

- Le module 17 est configuré de sorte à sélectionner la valeur maximale parmi les valeurs dSIG1 et dWF_OL qui lui sont fournies en entrée (ce module 17 est autrement dit responsable de l'activation ou non de l'ajustement de la commande WF_OL) ;
- Le module 18 est configuré de sorte à sélectionner la valeur minimale parmi les valeurs dSIG2 et la sortie du module de sélection 14 qui lui sont fournies en entrée ; et
- Le module 19 est configuré de sorte à sélectionner la valeur minimale parmi les valeurs dSIG3 et la sortie du module de sélection 15 qui lui sont fournies en entrée.

La valeur disponible en sortie du module 19 est notée dWF_sel.

Cette valeur dWF_sel est ensuite traitée par l'intégrateur I.

De façon connue en soi, l'intégrateur I comprend un amplificateur 20 (dont le gain est l'inverse de la période d'échantillonnage), un module de sommation 21 et un module d'intégration 22.

Dans le mode de réalisation décrit ici, il comprend en outre deux modules 23 et 24 permettant de garantir que la valeur de consigne WFCmd délivrée par le dispositif de génération 2 du doseur carburant est bien comprise (i.e. saturée) entre deux valeurs limites obtenues respectivement en appliquant un gain Gmin (via l'amplificateur 25) et un gain Gmax (via l'amplificateur 26) à la valeur de consigne WF_OL fournie par le module 2A.

Conformément à cette architecture, la valeur de consigne WFCmd est tantôt égale à la valeur WF_OL fournie par le module 2A de régulation en boucle ouverte, tantôt égale à la valeur WF_OL corrigée à l'aide du signal de correction SIG1, SIG2 ou SIG3, à la saturation près assurée par les modules 23 et 24.

Les **figures 5A et 5B** illustrent des exemples d'architecture numérique pouvant être retenues pour les modules 9 et 11. Une architecture similaire à celle représentée sur la figure 5A peut être envisagée pour le module 10.

En référence à la figure 5A, le module 9, pour implémenter la fonction de transfert C1'(p), comprend, de façon connue en soi :

- un élément dérivateur discret 9A, travaillant à la période d'échantillonnage Te, et recevant en entrée la différence $\delta1$ ;
- un élément 9B permettant de sélectionner sur des abaques prédéfinis, une valeur du paramètre T1 en fonction d'une valeur courante de la pression PS32 et de la pression totale Pt ;
- un élément 9C permettant de sélectionner sur des abaques prédéfinis, une valeur du gain K1 en fonction de la valeur courante de la pression PS32 et de la pression Pt ;
- un élément multiplicateur 9D, apte à multiplier la sortie de l'élément dérivateur 9A avec le paramètre T1 issu de l'élément 9B ;
- un élément sommateur 9E apte à sommer la sortie de l'élément 9D avec la différence $\delta1$ ;
- un élément multiplicateur 9F apte à multiplier le gain K1 issu de l'élément 9C avec la sortie de l'élément 9E ;
- un élément amplificateur 9G apte à multiplier la sortie de l'élément 9F par la période d'échantillonnage Te ;
- un élément sommateur 9H ;
- un intégrateur saturé 9I comprenant un module d'intégration 9J, un élément de saturation 9K et un module de sélection 9L commandé par l'indicateur f1 : plus précisément, si l'indicateur f1 est positionné à une valeur 1, le module de sélection 9L sélectionne la sortie du module d'intégration 9J ; en revanche, si l'indicateur f1 est positionné à une valeur 0, le module de sélection 9L sélectionne la valeur nulle.

En référence à la figure 5B, le module 11, pour implémenter la fonction de transfert C3'(p), comprend, de façon connue en soi :

- un élément dérivateur discret 11A, travaillant à la période d'échantillonnage Te, et recevant en entrée la différence 53 ;
- un élément 11B permettant de sélectionner sur des abaques prédéfinis, une valeur du paramètre T3 en fonction d'une valeur courante de la pression PS32 et de la pression totale Pt ;

- un élément 11C permettant de sélectionner sur des abaques prédéfinis, une valeur du gain K3 en fonction de la valeur courante de la pression PS32 et de la pression Pt ;
- un élément multiplicateur 11D, apte à multiplier la sortie de l'élément dérivateur 11A avec le paramètre T3 issu de l'élément 11B ;
- un élément sommateur 11E apte à sommer la sortie de l'élément 11D avec la différence δ3 ; et
- un élément multiplicateur 11F apte à multiplier le gain K3 issu de l'élément 11C avec la sortie de l'élément 11E.

## Revendications

1. Procédé de génération d'une commande de débit de carburant destiné à être injecté dans une chambre de combustion d'une turbomachine (1) propulsant un aéronef, ce procédé comprenant, lors d'une phase (E0) de démarrage de la turbomachine :

    - une étape (E10) de génération, en boucle ouverte, d'une commande (WF_OL) du débit de carburant à partir d'au moins une loi préétablie ; et
    - une étape de surveillance (E20-E30), en boucle fermée, d'au moins un paramètre de fonctionnement de la turbomachine sélectionné parmi :

        ◦ un taux d'accélération (dN2/dt) d'un compresseur de la turbomachine, et
        ◦ une température (EGT) en sortie d'une turbine de la turbomachine,

    cette étape de surveillance comprenant le maintien (E30) du paramètre de fonctionnement dans une plage de valeurs déterminée, à l'aide d'au moins un réseau correcteur (R1,R2,R3) associé à ce paramètre et apte à fournir un signal de correction de la commande de débit de carburant générée en boucle ouverte permettant de maintenir le paramètre de fonctionnement dans la plage de valeurs déterminée.

2. Procédé selon la revendication 1 dans lequel, au cours de l'étape de surveillance (E20-E30), on maintient le taux d'accélération du compresseur de la turbomachine entre une valeur de consigne d'accélération minimale (THR1) et une valeur de consigne d'accélération maximale (THR2).

3. Procédé selon la revendication 1 ou 2, dans lequel, au cours de l'étape de surveillance (E20-E30), on maintient la température (EGT) en sortie de la turbine de la turbomachine inférieure à une valeur de consigne de température maximale (THR3).

4. Procédé selon l'une quelconque des revendications 1 à 3 dans lequel on surveille à la fois le taux d'accélération (dN2/dt) du compresseur et la température (EGT) en sortie de la turbine, et dans lequel l'étape de surveillance comprend la sélection d'un signal parmi les signaux de correction générés par les réseaux correcteurs (R1,R2,R3) associés au taux d'accélération (dN2/dt) du compresseur et à la température (EGT) en sortie de la turbine, le signal sélectionné étant utilisé pour corriger la commande de débit carburant générée en boucle ouverte.

5. Procédé selon la revendication 4 dans lequel le signal de correction sélectionné est le signal de correction généré par le réseau correcteur (R3) associé à la température (EGT) en sortie de turbine.

6. Procédé selon la revendication 4 ou 5 dans lequel chaque réseau correcteur (R1,R2,R3) est de type proportionnel intégral ou double intégral, et est apte à délivrer un signal de correction de la commande de débit carburant évalué à partir d'une différence (δ1, δ2, δ3) entre une valeur courante du paramètre de fonctionnement auquel il est associé et une valeur de consigne déterminée (THR1,THR2,THR3).

7. Procédé selon la revendication 6 dans lequel au moins un réseau correcteur (R1,R2,R3) a un gain (K1,K2,K3) dont la valeur dépend d'une pression statique (PS32) dans la chambre de combustion et d'une pression totale (Pt) en entrée d'une soufflante de la turbomachine.

8. Procédé selon l'une quelconque des revendications 1 à 7 comprenant en outre une étape de saturation (E40) de la commande générée en boucle ouverte ou de la commande générée en boucle ouverte corrigée à l'aide du signal de correction.

9. Procédé selon la revendication 8 dans lequel ladite étape de saturation force la commande générée en boucle ouverte (WFCmd), soumise ou non à une étape d'ajustement (E30), à prendre l'une ou l'autre parmi une première valeur limite (Gmin x WF_OL) et une deuxième valeur limite (Gmax x WF_OL) correspondant respectivement à un pourcentage minimum (Gmin) et à un pourcentage maximum (Gmax) de la commande générée en boucle ouverte (WF_OL) et non soumise à ladite étape d'ajustement (E30), si la valeur courante de la commande générée en boucle ouverte (WFCmd) est respectivement inférieure à la première valeur limite ou supérieure à la deuxième valeur limite.

10. Dispositif (2) de génération d'une commande de débit de carburant destiné à être injecté dans une chambre de combustion d'une turbomachine (1) propulsant un aéronef, ce dispositif comprenant des moyens, activés lors d'une phase (E0) de démarrage de la turbomachine, comportant :

- un module (2A) de génération en boucle ouverte d'une commande (WF_OL) du débit de carburant à partir d'au moins une loi préétablie (LN) ;
- un module (2B) de surveillance en boucle fermée d'au moins un paramètre de fonctionnement de la turbomachine sélectionné parmi :

◦ un taux d'accélération (dN2/dt) d'un compresseur de la turbomachine, et
◦ une température (EGT) en sortie d'une turbine de la turbomachine,

ce module de surveillance étant apte à maintenir le paramètre de fonctionnement dans une plage de valeurs déterminée, et comprenant au moins un réseau correcteur (R1,R2,R3) associé à ce paramètre et apte à fournir un signal de correction de la commande de débit de carburant générée en boucle ouverte permettant de maintenir le paramètre de fonctionnement dans la plage de valeurs déterminée, et des moyens de correction activés le cas échéant de la commande de débit carburant générée par le module de génération à l'aide du signal de correction fourni par le réseau correcteur.

11. Dispositif selon la revendication 10 dans lequel le module de surveillance comprend une pluralité de réseaux correcteurs (R1,R2,R3) partageant un intégrateur commun (I).

12. Dispositif selon la revendication 11 dans lequel l'intégrateur commun (I) est saturé.

13. Dispositif selon l'une quelconque des revendications 10 à 12 dans lequel le module de surveillance comprend une pluralité de réseaux correcteurs (R1,R2, R3), et des moyens de sélection d'un signal de correction parmi les signaux de corrections fournis par ces réseaux correcteurs, le signal sélectionné étant fourni aux moyens de correction pour corriger la commande de débit de carburant généré en boucle ouverte par le module de génération.

14. Programme d'ordinateur comportant des instructions pour l'exécution des étapes du procédé de génération selon l'une quelconque des revendications 1 à 9 lorsque ledit programme est exécuté par un ordinateur.

15. Turbomachine (1) comprenant un dispositif de génération d'une commande de débit de carburant selon l'une quelconque des revendications 10 à 13.

## Patentansprüche

1. Verfahren zur Erzeugung einer Steuerung einer Kraftstoffmenge, die dazu bestimmt ist, in eine Brennkammer eines Turbotriebwerks (1) eines Luftfahrzeugs eingespritzt zu werden, wobei dieses Verfahren während einer Startphase (E0) des Turbotriebwerks umfasst:

- einen Schritt (E10) der Erzeugung einer Steuerung (WF_OL) der Kraftstoffmenge in offener Schleife auf Basis mindestens eines vorerstellten Gesetzes; und
- einen Schritt der Überwachung (E20-E30) mindestens eines Betriebsparameters des Turbotriebwerks in geschlossener Schleife, welcher ausgewählt ist unter:

\* einer Beschleunigungsrate (dN2/dt) eines Kompressors des Turbotriebwerks, und
\* einer Temperatur (EGT) am Ausgang einer Turbine des Turbotriebwerks,

wobei dieser Überwachungsschritt das Halten (E30) des Betriebsparameters in einem bestimmten Wertebereich mit Hilfe mindestens eines Korrekturnetzes (R1, R2, R3) umfasst, das diesem Parameter zugeordnet und geeignet ist, ein Korrektursignal der Steuerung der Kraftstoffmenge zu liefern, die in offener Schleife erzeugt wird und es ermöglicht, den Betriebsparameter in dem bestimmten Wertebereich zu halten.

2. Verfahren nach Anspruch 1, bei dem während des Überwachungsschrittes (E20-E30) die Beschleunigungsrate des Kompressors des Turbotriebwerks zwischen einem minimalen Beschleunigungssollwert (THR1) und einem maximalen Beschleunigungssollwert (THR2) gehalten wird.

3. Verfahren nach Anspruch 1 oder 2, bei dem während des Überwachungsschrittes (E20-E30) die Temperatur (EGT) am Ausgang der Turbine der Turbomaschine unter einem maximalen Temperatursollwert (THR3) gehalten wird.

4. Verfahren nach einem der Ansprüche 1 bis 3, bei dem sowohl die Beschleunigungsrate (dN2/dt) des Kompressors als auch die Temperatur (EGT) am Ausgang der Turbine überwacht werden, und bei dem der Überwachungsschritt die Auswahl eines Signals unter den Korrektursignalen umfasst, die von den Korrekturnetzen (R1, R2, R3), die der Beschleunigungsrate (dN2/dt) des Kompressors und der Temperatur (EGT) am Ausgang der Turbine zugeordnet sind, wobei das ausgewählte Signal verwendet wird, um die Steuerung der Kraftstoffmenge, die in offener Schleife erzeugt wird, zu korrigieren.

5. Verfahren nach Anspruch 4, bei dem das ausgewählte Korrektursignal das Korrektursignal ist, das von dem Korrekturnetz (R3), das der Temperatur (EGT) am Turbinenausgang zugeordnet ist, erzeugt wird.

6. Verfahren nach Anspruch 4 oder 5, bei dem jedes Korrekturnetz (R1, R2, R3) vom proportional integralen oder doppelt integralen Typ ist und geeignet ist, ein Korrektursignal der Steuerung der Kraftstoffmenge zu liefern, das auf Basis der Differenz ($\delta1$, $\delta2$, $\delta3$) zwischen einem laufenden Wert des Betriebsparameters, dem es zugeordnet ist, und einem bestimmten Sollwert (THR1, THR2, THR3) evaluiert wird.

7. Verfahren nach Anspruch 6, bei dem mindestens ein Korrekturnetz (R1, R2, R3) eine Verstärkung (K1, K2, K3) hat, deren Wert von einem statischen Druck (PS32) in der Brennkammer und einem Gesamtdruck (Pt) am Eingang eines Gebläses des Turbotriebwerks abhängt.

8. Verfahren nach einem der Ansprüche 1 bis 7, ferner umfassend einen Sättigungsschritt (E40) der in offener Schleife erzeugten Steuerung oder der in offener Schleife erzeugten, mit Hilfe des Korrektursignals korrigierten Steuerung.

9. Verfahren nach Anspruch 8, bei dem der Sättigungsschritt die in offener Schleife erzeugte Steuerung (WFCmd) zwingt, die einem Anpassungsschritt (E30) unterzogen wird oder nicht, den einen oder den anderen unter einem ersten Grenzwert (Gmin x WF_OL) und einem zweiten Grenzwert (Gmax x WF_OL) entsprechend einem minimalen Prozentsatz (Gmin) bzw. einem maximalen Prozentsatz (Gmax) der in offener Schleife erzeugten Steuerung (WF_OL), die nicht dem Anpassungsschritt (E30) unterzogen wird, anzunehmen, wenn der laufende Wert der in offener Schleife erzeugten Steuerung (WFCmd) kleiner als der erste Grenzwert bzw. größer als der zweite Grenzwert ist.

10. Vorrichtung (2) zur Erzeugung einer Steuerung einer Kraftstoffmenge, die dazu bestimmt ist, in eine Brennkammer eines Turbotriebwerks (1) eines Luftfahrzeugs eingespritzt zu werden, wobei diese Vorrichtung Mittel umfasst, die während einer Startphase (E0) des Turbotriebwerks aktiviert werden, umfassend:

- ein Modul (2A) zur Erzeugung einer Steuerung (WF_OL) der Kraftstoffmenge in offener Schleife auf Basis mindestens eines vorerstellten Gesetzes (LN);
- ein Modul (2B) zur Überwachung mindestens eines Betriebsparameters des Turbotriebwerks in geschlossener Schleife, welcher ausgewählt ist unter:

* einer Beschleunigungsrate (dN2/dt) eines Kompressors des Turbotriebwerks, und
* einer Temperatur (EGT) am Ausgang einer Turbine des Turbotriebwerks,

wobei dieses Überwachungsmodul geeignet ist, den Betriebsparameter in einem bestimmten Wertebereich zu halten, und mindestens ein Korrekturnetz (R1, R2, R3) umfasst, das diesem Parameter zugeordnet und geeignet ist, ein Korrektursignal der Steuerung der Kraftstoffmenge zu liefern, die in offener Schleife erzeugt wird und es ermöglicht, den Betriebsparameter in dem bestimmten Wertebereich zu halten, und gegebenenfalls aktivierte Korrekturmittel der Steuerung der Kraftstoffmenge, die von dem Erzeugungsmodul erzeugt wird, mit Hilfe des von dem Korrekturnetz gelieferten Korrektursignals.

11. Vorrichtung nach Anspruch 10, bei dem das Überwachungsmodul eine Vielzahl von Korrekturnetzen (R1, R2, R3) umfasst, die einen gemeinsamen Integrator (I) teilen.

12. Vorrichtung nach Anspruch 11, bei der der gemeinsame Integrator (I) gesättigt ist.

13. Vorrichtung nach einem der Ansprüche 10 bis 12, bei der das Überwachungsmodul eine Vielzahl von Korrekturnetzen (R1, R2, R3) und Mittel zur Auswahl eines Korrektursignals unter den von diesen Korrekturnetzen gelieferten Korrektursignalen umfasst, wobei das ausgewählte Signal an die Korrekturmittel geliefert wird, um die Steuerung der Kraftstoffmenge, die in offener Schleife von dem Erzeugungsmodul erzeugt wird, zu korrigieren.

14. Computerprogramm, umfassend Instruktionen für die Ausführung der Schritt des Erzeugungsverfahrens nach einem der Ansprüche 1 bis 9, wenn das Programm von einem Computer ausgeführt wird.

15. Turbotriebwerk (1), umfassend eine Vorrichtung zur Erzeugung einer Steuerung einer Kraftstoffmenge nach einem der Ansprüche 10 bis 13.

**Claims**

1. A method of generating a command of a fuel flow rate to be injected into a combustion chamber of a turbine engine (1) for propelling an aircraft, the method being for use during a stage (E0) of starting the turbine engine, and comprising:

> • an open-loop generating step (E10) of generating a fuel flow rate command (WF_OL) from at least one pre-established relationship; and
> • a closed-loop monitoring step (E20-E30) of monitoring at least one operating parameter of the turbine engine selected from:
>
> > • a rate of acceleration (dN2/dt) of a compressor of the turbine engine; and
> > • a temperature (EGT) at the outlet from a turbine of the turbine engine;

this monitoring step comprising maintaining (E30) the operating parameter in a determined range of values by using at least one corrector network (R1, R2, R3) associated with the parameter and suitable for delivering a signal for correcting the open-loop generated fuel flow rate command so as to maintain the operating parameter in the determined range of values.

2. A method according to claim 1, wherein, during the monitoring step (E20-E30), the rate of acceleration of the compressor of the turbine engine is maintained between a minimum acceleration setpoint value (THR1) and a maximum acceleration setpoint value (THR2).

3. A method according to claim 1 or claim 2, wherein, during the monitoring step (E20-E30), the temperature (EGT) at the outlet from the turbine of the turbine engine is maintained below a maximum temperature setpoint value (THR3).

4. A method according to any one of claims 1 to 3, wherein both the rate of acceleration (dN2/dt) of the compressor and the temperature (EGT) at the outlet from the turbine are monitored, and wherein the monitoring step includes selecting one of the signals from among the correction signals generated by the corrector networks (R1, R2, R3) associated with the rate of acceleration (dN2/dt) of the compressor and with the temperature (EGT) at the outlet from the turbine, the selected signal being used for correcting the open-loop generated fuel flow rate command.

5. A method according to claim 4, wherein the selected correction signal is the correction signal generated by the corrector network (R3) associated with the temperature (EGT) at the outlet from the turbine.

6. A method according to claim 4 or claim 5, wherein each corrector network (R1, R2, R3) is of the proportional integral or proportional double integral type, and is suitable for delivering a correction signal for correcting the fuel flow rate command, which correction signal is evaluated from a difference ($\delta$1, $\delta$2, $\delta$3) between a current value of the operating parameter with which it is associated and a determined setpoint value (THR1, THR2, THR3).

7. A method according to claim 6, wherein at least one corrector network (R1, R2, R3) has a gain (K1, K2, K3) of value that depends on a static pressure (PS32) in the combustion chamber and on a total pressure (Pt) at the inlet of a fan of the turbine engine.

8. A method according to any one of claims 1 to 7, further including a saturating step (E40) for saturating the open-loop generated command or the open-loop generated command as corrected using the correction signal.

9. A method according to claim 8, wherein said saturating step forces the open-loop generated command (WFCmd) whether or not it is subjected to an adjustment step (E30) to take one or the other of a first limit value (Gmin×WF_OL) and a second limit value (Gmax×WF_OL) corresponding respectively to a minimum percentage (Gmin) and to a maximum percentage (Gmax) of the open-loop generated command (WF_OL) that has not been subjected to said adjustment step (E30), if the current value of the open-loop generated command (WFCmd) is respectively less than the first limit value or greater than the second limit value.

10. A device (2) for generating a command of a fuel flow rate to be injected into a combustion chamber of a turbine engine (1) for propelling an aircraft, the device comprising means that are activated during a stage (E0) of starting the turbine engine and that comprise:

> • a generator module (2A) for open-loop generation of a command (WF_OL) for the fuel flow rate from at least one pre-established relationship (LN); and
> • a monitoring module (2B) for closed-loop monitoring of at least one operating parameter of the turbine engine selected from:
>
> > • a rate of acceleration (dN2/dt) of a compressor of the turbine engine; and
> > • a temperature (EGT) at the outlet from a turbine of the turbine engine;

the monitoring module being suitable for maintaining the operating parameter in a determined range of values, and comprising at least one corrector network (R1, R2, R3) associated with that parameter and suitable for delivering a correction signal for correcting the open-loop generated fuel flow rate command so as to enable the operating parameter to be maintained in the determined range of values, and correction means that are activated, where appropriate, for correcting the fuel flow rate command generated by the generator module by using the correction signal delivered by the corrector network.

11. A device according to claim 10, wherein the monitoring module comprises a plurality of corrector networks (R1, R2, R3) sharing a common integrator (I).

12. A device according to claim 11, wherein the common integrator (I) is saturated.

13. A device according to any one of claims 10 to 12, wherein the monitoring module comprises a plurality of corrector networks (R1, R2, R3) and the means for selecting one of the correction signals from among the correction signals delivered by the corrector networks, the selected signal being delivered to the correction means for correcting the fuel flow rate command as generated in an open-loop by the generator module.

14. A computer program including instructions for executing steps of the method of generation according to any one of claims 1 to 9 when said program is executed by a computer.

15. A turbine engine (1) including a device according to any one of claims 10 to 13 for generating a fuel flow rate command.

FIG.1

FIG.2

FIG.3

FIG.4

WFCmd

**FIG.5A**

**FIG.5B**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4341071 A
- FR 2664651
- US 3937588 A
- EP 1555438 A
- FR 1151778